# EUROPÄISCHE PATENTSCHRIFT

(11) **EP 2 593 319 B1**
(45) Veröffentlichungstag und Bekanntmachung des Hinweises auf die Patenterteilung: **17.06.2015**
(21) Anmeldenummer: 11733635.4
(22) Anmeldetag: 07.07.2011
(51) Int. Cl.: B60J 1/00

(54) **FENSTERSCHEIBE UND VERFAHREN ZUM MONTIEREN EINER FENSTERSCHEIBE AN EINEM FAHRZEUG**
WINDOW PANE AND METHOD FOR MOUNTING A WINDOW PANE ON A VEHICLE
VITRE DE FENÊTRE ET PROCÉDÉ POUR MONTER UNE VITRE DE FENÊTRE SUR UN VÉHICULE

(30) Priorität: 12.07.2010 DE 102010026873
(43) Veröffentlichungstag der Anmeldung: 22.05.2013
(73) Patentinhaber: Knorr-Bremse Gesellschaft mit beschränkter Haftung, 2340 Mödling (AT)
(72) Erfinder: RITT, Alois, A-3300 Amstetten (AT)
(74) Vertreter: Schönmann, Kurt
(86) Internationale Anmeldenummer: PCT/EP2011/061476
(87) Internationale Veröffentlichungsnummer: WO 2012/007339

(56) Entgegenhaltungen:
- EP-A2- 0 102 526
- US-A- 5 950 398

## Beschreibung

Die vorliegende Erfindung bezieht sich auf ein Fenster für ein Fahrzeug und ein Verfahren zum.Montieren einer Fensterscheibe an einer Struktur eines Fahrzeugs.

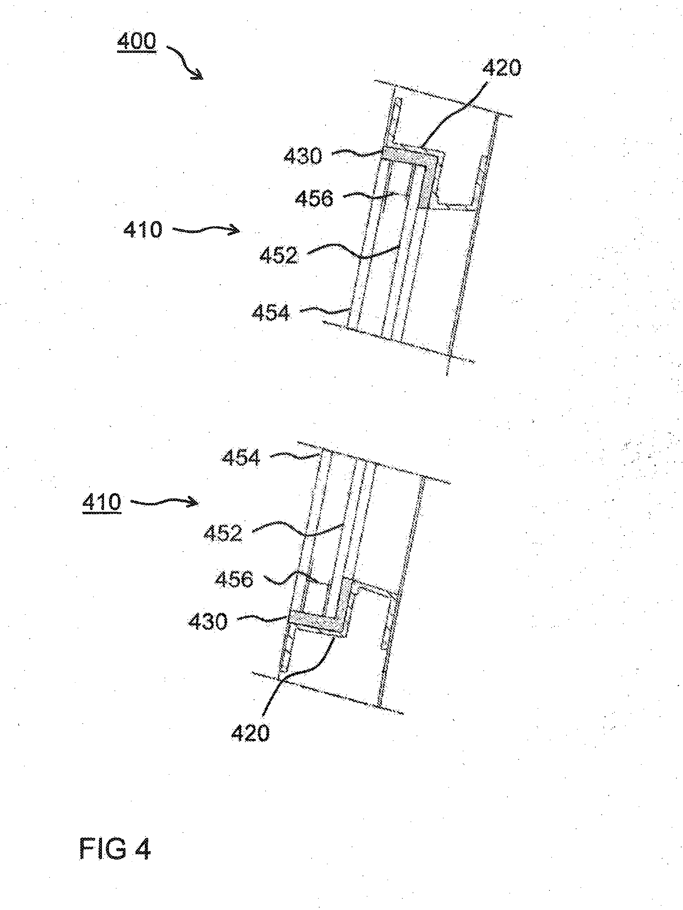

Fig. 4 zeigt ein Fenster 400 für ein Fahrzeug. Das Fenster 400 kann Teil einer Türe des Fahrzeugs sein. Das Fenster 400 weist eine Fensterscheibe 410 und einen Fensterrahmen 420 auf. Zwischen der Fensterscheibe 410 und dem Fensterrahmen 420 ist ein Verklebungsmaterial 430 angeordnet. Die Fensterscheibe 410 weist eine erste Scheibe 452 und eine zweite Scheibe 454 sowie einen dazwischen angeordneten Abstandhalter 456 auf. Die erste Scheibe 452 ist eine Innenscheibe und die zweite Scheibe 454 ist eine Außenscheibe des Fensters 400. Der Fensterrahmen 420 weist ein stufenförmiges Profil auf, so dass es erforderlich ist, die Fensterscheibe 410 von außen in den Fensterrahmen 420 einzusetzen.

Die EP 0 102 526 A2 offenbart ein Fahrzeugfenster, insbesondere ein Seitenfenster von Reisezugwagen.

Es ist die Aufgabe der vorliegenden Erfindung, ein verbessertes Fenster für ein Fahrzeug und ein verbessertes Verfahren zum Montieren einer Fensterscheibe an einer Struktur eines Fahrzeugs zu schaffen.

Diese Aufgabe wird durch ein Fenster für ein Fahrzeug und ein Verfahren zum Montieren einer Fensterscheibe an einer Struktur eines Fahrzeugs gemäß den unabhängigen Patentansprüchen gelöst. Vorteilhafte Weiterbildungen der Erfindung sind in den abhängigen Ansprüchen angegeben.

Der Erfindung liegt der Gedanke zugrunde, sowohl die Fensterscheibe als auch den Fensterrahmen so zu gestalten, dass sie eine zueinander komplementäre, ineinandergreifende geometrische Gestaltung aufweisen. Die geometrische Gestaltung betrifft die Bereiche von Fensterscheibe und Fensterrahmen, die bei einer Zusammenfügung der selben miteinander in Kontakt kommen. Die geometrische Gestaltung ist derart, dass die Fensterscheibe aus Richtung der Innenseite des Fahrzeugs passend in den Fensterrahmen eingebracht werden kann.

Vorteilhafterweise kann dadurch ein Herausfallen der Fensterscheibe aus dem Fensterrahmen in Richtung der Außenseite des Fahrzeugs verhindert werden. Dies hat den Vorteil, dass auch im unwahrscheinlichen Fall eines Verlusts der Verklebung die Fensterscheibe nicht verloren gehen kann. Die Sicherheit gegen einen Verlust des Fensters kann somit weiter erhöht werden. Dies erhöht die Betriebssicherheit des Fahrzeugs.

Die vorliegende Erfindung schafft eine Fensterscheibe für ein Fahrzeug, mit folgendem Merkmal:
einer abgestuften Randfläche, die sich über mindestens eine Schmalseite der Fensterscheibe erstreckt, wobei die abgestufte Randfläche ein stufenförmiges Profil mit einer sich in Längsrichtung der Schmalseite erstreckenden Profilkante aufweist.

Unter einer Fensterscheibe kann eine plane oder gekrümmte Scheibe oder Platte verstanden werden, die typischerweise durchsichtig ist. Die Fensterscheibe kann aus Fensterglas, Acrylglas, Kunststoff oder dergleichen hergestellt sein. Die Fensterscheibe kann beispielsweise rechteckig oder rund sein. Unter einem Fahrzeug kann ein Fahrzeug zur Personenbeförderung, beispielsweise ein Schienenfahrzeug verstanden werden. Mit einer abgestuften Randfläche ist eine Randfläche gemeint, die einen Vorsprung, eine Stufe oder eine Abstufung aufweist, die durch das stufenförmige Profil vorgegeben wird. Bei der Randfläche kann es sich um einen Teil derjenigen Umfangsfläche der Fensterscheibe handeln, die sich entlang der Schmalseite des Fensters erstreckt. Die Schmalseite der Fensterscheibe kann im Wesentlichen orthogonal zu einer Hauptfläche der Fensterscheibe ausgerichtet sein. Die Hauptfläche kann im eingebauten Zustand des Fensters im Wesentlichen parallel zu einer Außenwand des Fahrzeugs ausgerichtet sein. Bei einer rechteckigen Fensterscheibe kann sich die abgestufte Randfläche über eine, zwei, drei oder alle vier Schmalseiten der Fensterscheibe erstrecken. Dabei kann sich die Randfläche jeweils über die gesamte Länge oder einen Abschnitt einer Schmalseite erstrecken. Unter einem stufenförmigen Profil kann ein Profil mit einem Vorsprung, einer Stufe oder einer Abstufung verstanden werden, beispielsweise ein Falz. Die Längsrichtung einer Schmalseite entspricht einer Richtung entlang einer Haupterstreckungsrichtung der Schmalseite. Unter einer Profilkante kann eine Kante verstanden werden, die das stufenförmige Profil bildet. Die Profilkante kann parallel zu gegenüberliegenden Außenkanten der Fensterscheibe verlaufen und von den Außenkanten beäbstandet sein. Die Profilkante kann einen Übergangsbereich zwischen zwei unterschiedlich ausgerichteten, beispielsweise orthogonal zueinander stehenden, Flächenabschnitten des Randbereichs darstellen. Somit kann es sich bei der erfindungsgemäßen Fensterscheibe um eine herkömmliche Fensterscheibe handeln, die sich jedoch in ihrem Randbereich von der herkömmlichen Fensterscheibe unterscheidet.

Gemäß einer Ausführungsform kann die Fensterscheibe mindestens zwei nebeneinander angeordnete Scheiben aufweisen. Es kann sich hierbei also um eine so genannte Doppelverglasung handeln. Die Scheiben können parallel angeordnet sein. Damit ist gemeint, dass Hauptoberflächen der Scheiben in einem definierten Abstand zueinander die gleiche Ausrichtung aufweisen können. Dabei können die Fensterscheiben nicht nur gerade sein, sondern auch kreisbogenförmig oder gekrümmt sein. Somit können die Scheiben auch konzentrisch angeordnet sein. Durch die mindestens zwei Scheiben kann eine bessere Wärmedämmung beziehungsweise Isolationswirkung erzielt werden. Eine der Scheiben kann als eine Außenscheibe konzipiert sein und eine andere der Scheiben als eine Innenscheibe, wobei die beiden Scheiben unterschiedliche Eigenschaften aufweisen können.

Dabei kann eine erste der mindestens zwei Scheiben zumindest an der abgestuften Randfläche der Fensterscheibe einen Überstand über eine zweite der mindestens zwei Scheiben aufweisen. Auf diese Weise kann das stufenförmige Profil ausgebildet werden. Aufgrund des Überstands kann die erste Scheibe über die zweite Scheibe hinausragen. Der Überstand kann sich dadurch ergeben, dass die erste Scheibe eine größere Längenund/oder Breitenabmessung als die zweite Scheibe aufweist. Somit kann die erste Scheibe einen größeren Umfang und eine größere Hauptoberfläche als die zweite Scheibe aufweisen. Indem die mindestens zwei Scheiben unterschiedliche Abmessungen aufweisen, kann das stufenförmige Profil auf einfache Weise realisiert werden. Das stufenförmige Profil ergibt sich somit aus mindestens zwei unterschiedlich dimensionierten Scheiben, die miteinander verbunden sind.

Die vorliegende Erfindung schafft ferner einen Fensterrahmen für eine Fensterscheibe eines Fahrzeugs, mit folgendem Merkmal:
einer abgestuften Aufnahmefläche zum Aufnehmen einer abgestuften Randfläche der Fensterscheibe, wobei die abgestufte Aufnahmefläche in einem der abgestuften Randfläche der Fensterscheibe gegenüberliegenden Bereich ein stufenförmiges Profil mit einer sich in Längsrichtung einer Schmalseite des Fensterrahmens erstreckenden Profilkante aufweist.

Unter einem Fensterrahmen kann ein Rahmenbauglied zum Aufnehmen einer Fensterscheibe verstanden werden. Der Fensterrahmen kann beispielsweise direkt an einer Fahrzeugstruktur vorgesehen sein. Bei der Fahrzeugstruktur kann es sich beispielsweise auch um eine Struktur eines Türflügels des Fahrzeugs handeln. Unter einer Aufnahmefläche kann zumindest ein Teil einer Fläche oder Oberfläche der Schmalseite des Fensterrahmens, die dem Fenster zugewandt ist, verstanden werden. Die Aufnahmefläche kann in dem Fensterrahmen integriert oder an dem Fensterrahmen abnehmbar befestigt sein. Das stufenförmige Profil des Fensterrahmens kann komplementär zu dem stufenförmigen Profil der Fensterscheibe sein. Somit kann die Profilkante des Fensterrahmens parallel zu der Profilkante der Fensterscheibe ausgerichtet sein, wenn die Fensterscheibe in dem Fensterrahmen angeordnet ist.

Die abgestufte Aufnahmefläche kann zum Ausbilden des stufenförmigen Profils eine Grundfläche und einen sich in Richtung der Fensterscheibe erstreckenden Vorsprung aufweisen, wobei eine Breite des Vorsprungs geringer als eine Breite der Schmalseite der Fensterscheibe ist. Unter einer Grundfläche der Aufnahmefläche kann ein Bereich oder Abschnitt der Aufnahmefläche verstanden werden, der einen vorstehenden Teil des stufenförmigen Profils der Fensterscheibe aufnehmen kann. Unter einem Vorsprung kann hierbei eine Erhebung bezüglich der Grundfläche verstanden werden, deren Haupterstreckungsrichtung in Längsrichtung der Schmalseite des Fensterrahmens verläuft. Der Vorsprung ist bezüglich der Grundfläche weiter in Richtung einer Außenseite des Fahrzeugs angeordnet. Bei der Breite der Schmalseite der Fensterscheibe handelt es sich um eine Dicke der Fensterscheibe. Unter einer Breite des Vorsprungs kann eine Abmessung des Vorsprungs quer zu dessen Haupterstreckungsrichtung verstanden werden. Dies bietet den Vorteil, dass der Fensterrahmen bei dieser Ausgestaltung der Aufnahmefläche die Fensterscheibe besonders sicher aufnehmen und gegen ein Herausfallen nach außen schützen kann. Durch eine geeignete Wahl der Breite des Vorsprungs kann ein bündiger Abschluss von Fensterscheibe und Fensterrahmen an der Fahrzeugaußenseite erreicht werden. Der bündige Abschluss bietet den Vorteil einer verbesserten Aerodynamik an der Fahrzeugaußenseite.

Gemäß einer Ausführungsform kann ein Verklebungsmaterial vorgesehen sein, das zumindest im Bereich des stufenförmigen Profils auf einer der Fensterscheibe zugewandten Seite der abgestuften Aufnahmefläche angeordnet ist. Unter einem Verklebungsmaterial kann ein Haftmittel oder dergleichen, ein Element aus einem Kunststoff, Gummi, Fensterkitt oder dergleichen, eine Gummilippe oder eine Dichtlippe verstanden werden. Dies bietet den Vorteil, dass die Fensterscheibe sicher in dem Fensterrahmen gehalten werden kann und gegen Erschütterungen geschützt ist.

Die abgestufte Aufnahmefläche kann aus einem Metall oder einem Kunststoff gebildet sein. Bei dem Metall kann es sich beispielsweise um Aluminium handeln. Dies bietet den Vorteil, dass die Aufnahmefläche formstabil ist. Bei der Verwendung von Aluminium für die Aufnahmefläche wird eine Leichtbauweise des Fahrzeugs unterstützt. Bei dem Kunststoff kann es sich um ein geeignetes Polymermaterial handeln.

Die vorliegende Erfindung schafft ferner ein Fenster für ein Fahrzeug, mit folgenden Merkmalen:
einem erfindungsgemäßen Fensterrahmen, der an einer Fahrzeugstruktur befestigt ist; und
einer erfindungsgemäßen Fensterscheibe, die in dem Fensterrahmen eingesetzt ist.

Unter einem Fenster kann eine Baugruppe bestehend aus Fensterrahmen und Fensterscheibe verstanden werden. Unter einer Fahrzeugstruktur kann beispielsweise eine Karosserie oder ein Türflügel des Fahrzeugs verstanden werden. Somit kann der Fensterahmen an der Struktur des Türflügels eines Fahrzeuges befestigt sein, und nicht unbedingt direkt an der Struktur des Fahrzeuges.

Gemäß einer Ausführungsform kann ein Verriegelungselement vorgesehen sein, das auf einer einem Innenraum des Fahrzeugs zugewandten Seite der Fensterscheibe angeordnet ist und mit dem Fensterrahmen und der Fensterscheibe verbunden ist, um eine Position der in dem Fensterrahmen eingesetzten Fensterscheibe zu sichern. Unter einem Verriegelungselement kann ein Körper oder ein Material verstanden werden, mit dem sich die in dem Fensterrahmen eingesetzte Fensterscheibe positionsmäßig sichern lässt. Das Verriegelungselement kann aus einem Kunststoff, Gummi, Fensterkitt, beschichteten Metall oder dergleichen hergestellt sein. Das Verriegelungselement kann eine verschraubte oder geklebte Leiste oder ein Rahmen aus Kunststoff oder beschichtetem Metall sein. Es kann aber auch ein formschlüssig mit dem Fensterrahmen verbundenes Extrusionsprofil aus Kunststoff oder Gummi sein. Dies bietet den Vorteil, dass die Fensterscheibe so in dem Fensterrahmen gesichert werden kann, dass auch ein Herausfallen in das Fahrzeuginnere verhindert werden kann. Das Verriegelungselement bietet den Vorteil einer zusätzlichen Sicherung zu dem Verklebungsmaterial, so dass die Befestigung der Scheibe in dem Rahmen höheren Belastungen standhalten kann.

Die vorliegende Erfindung schafft ferner ein Verfahren zum Montieren einer Fensterscheibe an einer Fahrzeugstruktur, mit folgenden Schritten:
Bereitstellen eines erfindungsgemäßen Fensterrahmens an der Fahrzeugstruktur des Fahrzeugs;
Bereitstellen einer erfindungsgemäßen Fensterscheibe auf einer einem Innenraum des Fahrzeugs zugewandten Seite der Fahrzeugstruktur; und
Einsetzen der Fensterscheibe in den Fensterrahmen, wobei das Einsetzen in einer Richtung von der dem Innenraum des Fahrzeugs zugewandten Seite der Fahrzeugstruktur zu einer Außenseite des Fahrzeugs hin erfolgt.

Das Verfahren ist mit einem erfindungsgemäßen Fenster vorteilhaft umsetzbar.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Fenster für ein Fahrzeug, gemäß einem Ausführungsbeispiel der vorliegenden Erfindung;
- Fig. 2: ein Fenster für ein Fahrzeug, gemäß einem weiteren Ausführungsbeispiel der vorliegenden Erfindung;
- Fig. 3: ein Ablaufdiagramm eines erfindungsgemäßen Verfahrens; und
- Fig. 4: ein Fenster für ein Fahrzeug, gemäß dem Stand der Technik.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

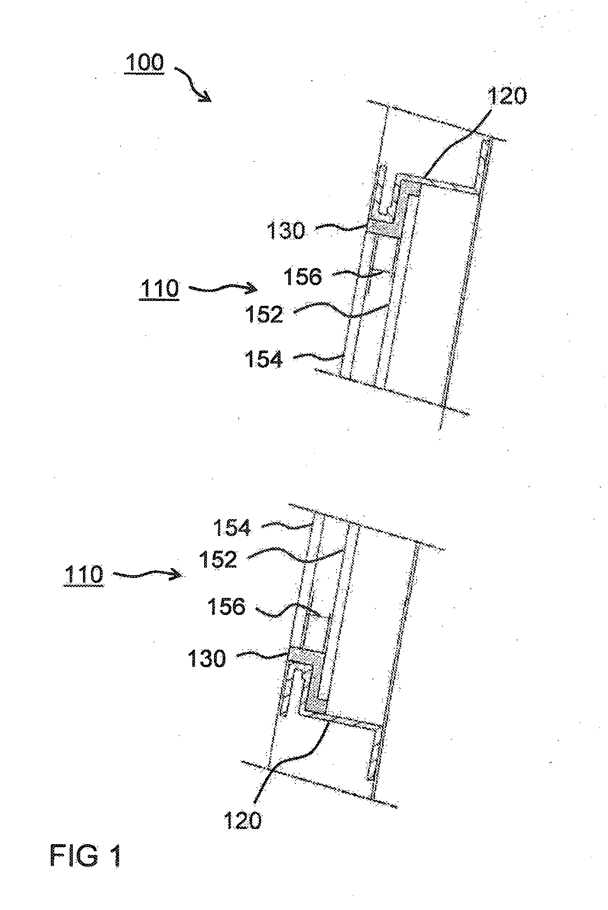

Fig. 1. zeigt eine Querschnittsdarstellung durch ein Fenster 100 für ein Fahrzeug, gemäß einem Ausführungsbeispiel der vorliegenden Erfindung. Das Fenster 100 kann Teil einer Tür des Fahrzeugs sein. Gezeigt ist eine geometrische Gestaltung des Fensterglases und eines Karosserieabschnitts bzw. insbesondere eines Türflügelabschnitts des Fahrzeugs. Dabei ist lediglich ein oberer und ein unterer Abschnitt des Fensters 100 im Übergangsbereich zur Karosserie bzw. zum Türflügel gezeigt. Das Fenster 100 weist eine Fensterscheibe 110 und einen Fensterrahmen 120 auf. Zwischen der Fensterscheibe 110 und dem Fensterrahmen 120 ist ein Verklebungsmaterial 130 angeordnet.

Die Fensterscheibe 110 weist eine erste Scheibe 152 und eine zweite Scheibe 154 auf. Die beiden Scheiben 152, 154 erstrecken sich entlang einer Haupterstreckungsebene der Fensterscheibe 110. Die beiden Scheiben 152, 154 verlaufen planparallel. Die Haupterstreckungsebenen der Scheiben 125, 154 sind somit Parallelebenen. Beide Scheiben 152, 154 können die gleiche Dicke aufweisen. Jede der beiden Scheiben 152, 154 weist zwei Hauptseiten und, im Falle rechteckiger Scheiben 152, 154, vier Schmalseiten auf. Die erste Scheibe 152 (in Fig. 1 rechts gezeigt) ist einem Innenraum des Fahrzeugs zugewandt, es handelt sich hierbei also um eine Innenscheibe der Fensterscheibe 110. Bei der zweiten Scheibe 154 (in Fig. 1 links gezeigt) handelt es sich um eine Außenscheibe, die einer Außenseite des Fahrzeugs zugewandt ist.

Ein Abstandhalter 156 ist zwischen der ersten Scheibe 152 und der zweiten Scheibe 154 angeordnet. Der Abstandhalter 156 ist in einem Randbereich der Fensterscheibe 110 angeordnet, um einen bestimmten Abstand zwischen den beiden Scheiben 152, 154 zu definieren und die beiden Scheiben 152, 154 miteinander zu verbinden. Der Abstandhalter 156 kann umlaufend entlang des Randbereichs der Fensterscheibe 110 angeordnet sein. Bei dem gezeigten Ausführungsbeispiel beträgt der bestimmte Abstand in etwa die doppelte Dicke einer Scheibe. Die Schmalseiten der beiden Scheiben 152, 154 zusammen mit einer dem Fensterrahmen 120 zugewandten Oberfläche des Abstandhalters 156 bilden eine abgestufte Randfläche der Fensterscheibe 110. Der Abstandhalter 156 schließt bündig mit der Schmalseite der zweiten Scheibe 154 ab.

Die erste Scheibe 152 weist zum Ausbilden der abgestuften Randfläche eine größere Hautfläche als die zweite Scheibe 154 auf. Wie in Fig. 1 gezeigt, stehen die dem Fensterrahmen 120 zugewandten Schmalseiten der ersten Scheibe 152 über entsprechende Schmalseiten der zweiten Scheibe 154 vor (in Fig. 1 oben und unten gezeigt). Der Betrag, um den eine Schmalseite der ersten Scheibe 152 bezüglich der entsprechenden Schmalseite der zweiten Scheibe 154 vorsteht, kann einem 4-5 fachen der Dicke der ersten oder zweiten Scheibe 152, 154 betragen. Somit ist an dem Fensterrahmen 120 zugewandten Schmalseiten der Fensterscheibe 110 ein stufenförmiges Profil ausgebildet. Das Profil weist eine Profilkante auf, die sich entlang der Längsrichtung der jeweiligen Schmalseite der Fensterscheibe 110 erstreckt.

Das stufenförmige Profil der abgestuften Randfläche der Fensterscheibe 110 weist drei Abschnitte auf. Die drei Abschnitte sind stufenförmig angeordnet und bilden zusammen die Schmalseite der Fensterscheibe 110. Die Schmalseite der Fensterscheibe 110 weist somit keinen ebenen sondern einen abgestuften Verlauf auf. Der Vorsprung des abgestuften Verlaufs ist auf der Seite der ersten Scheibe 152 angeordnet und wird durch den Überstand der Innenscheibe 152 über die Außenscheibe 154, gebildet. Zwischen einem ersten und einem zweiten der drei Abschnitte verläuft die Profilkante.

Der erste Abschnitt des stufenförmigen Profils erstreckt sich über die Schmalseite der ersten Scheibe 152. Der erste Abschnitt stellt eine in Richtung des Fensterrahmens 120 vorgeschobene Ebene der Schmalseite der Fensterscheibe 110 dar. An den ersten Abschnitt schließt sich ein zweiter Abschnitt an, der im rechten Winkel zu dem ersten Abschnitt verläuft. Der zweite Abschnitt erstreckt sich entlang einer Höhenrichtung des Vorsprungs des stufenförmigen Profils um den Betrag der Höhe des Vorsprungs. Gemäß diesem Ausführungsbeispiel erstreckt sich der zweite Abschnitt entlang der im Bezug auf die Fensterscheibe 110 innen angeordneten Hauptseite der ersten Scheibe 152. Der

Übergang zwischen dem zweiten Abschnitt und dem sich daran anschließenden dritten Abschnitt stellt die Profilkante dar. An der Profilkante knickt das stufenförmige Profil nochmals im rechten Winkel ab. Der dritte Abschnitt erstreckt sich in einer Ebene parallel zu dem ersten Abschnitt, aber um den Betrag der Höhe des Vorsprungs bezüglich des Fensterrahmens 120 zurückversetzt. Der dritte Abschnitt ist durch die dem Fensterrahmen 120 zugewandte Oberfläche des Abstandhalters 156 und die bündig daran anschließende Schmalseite der zweiten Scheibe 154 gebildet.

Der Fensterrahmen 120 nimmt die Fensterscheibe 110 umfangsmäßig auf. An den der Fensterscheibe 110 zugewandten Flächen des Fensterrahmens 120 ist eine abgestufte Aufnahmefläche ausgebildet. Das Verklebungsmaterial 130 ist zwischen der abgestuften Aufnahmefläche und der Randfläche der Fensterscheibe 110 angeordnet. Der Fensterrahmen 120 oder zumindest die abgestufte Aufnahmefläche kann aus einem Metall, beispielsweise aus Aluminium, oder einem Kunststoff gebildet sein und somit eine Metallstruktur beziehungsweise eine Aluminiumstruktur oder eine Kunststoffstruktur sein. Die abgestufte Aufnahmefläche des Fensterrahmens 120 ist durch eine Grundfläche und einen Vorsprung gebildet. Der Vorsprung steht von der Grundfläche in Richtung der Fensterscheibe 110 vor. Die Höhe des Vorsprungs an der abgestuften Aufnahmefläche des Fensterrahmens 120 ist gleich der Höhe des Vorsprungs an der abgestuften Randfläche der Fensterscheibe 110. Somit ergibt sich an der abgestuften Aufnahmefläche des Fensterrahmens 120 ein stufenförmiges Profil.

Das stufenförmige Profil der abgestuften Aufnahmefläche des Fensterrahmens 120 weist drei Abschnitte auf. Von der Seite des Fensterrahmens 120 her betrachtet, die dem Innenraum des Fahrzeugs zugewandt ist (in Fig. 1 rechts dargestellt), erstreckt sich ein erster Abschnitt des stufenförmigen Profils in einer Ebene, die im Wesentlichen parallel zu den Schmalseiten der Scheiben 152, 154 des Fensters 110 verläuft. An den ersten Abschnitt schließt sich ein zweiter Abschnitt an, der im rechten Winkel zu dem ersten Abschnitt verläuft. Der zweite Abschnitt erstreckt sich entlang einer Höhenrichtung des Vorsprungs des stufenförmigen Profils um den Betrag der Höhe des Vorsprungs. Gemäß diesem Ausführungsbeispiel erstreckt sich der zweite Abschnitt parallel zu der im Bezug auf die Fensterscheibe 110 innen angeordneten Hauptseite der ersten Scheibe 152. Der Übergang zwischen dem zweiten Abschnitt und dem sich daran anschließenden dritten Abschnitt stellt die Profilkante des Fensterrahmens 120 dar. An der Profilkante knickt das stufenförmige Profil nochmals im rechten Winkel ab. Der dritte Abschnitt erstreckt sich in einer Ebene parallel zu dem ersten Abschnitt, aber um den Betrag der Höhe des Vorsprungs von dem ersten Abschnitt bezüglich der Fensterscheibe 110 vorgeschoben. Der dritte Abschnitt erstreckt sich bis zu der im Bezug auf die Fensterscheibe 110 außen angeordneten Hauptseite der zweiten Scheibe 154 über die Dicke des Vorsprungs. Die Dicke des Vorsprungs, und somit die Breite des dritten Abschnitts, des stufenförmigen Profils an der abgestuften Aufnahmefläche des Fensterrahmens 120 ist um die Dicke des Verklebungsmaterials 130 geringer als die Dicke der zweiten Scheibe 154 und des Abstandhalters 156, also die Breite des dritten Abschnitts des stufenförmigen Profils der abgestuften Randfläche der Fensterscheibe 110.

Der erste Abschnitt des Fensterrahmens 120 kann sich weiter, über die Fensterscheibe 110 hinaus, in den Innenraum des Fahrzeugs erstrecken. An den dritten Abschnitt kann ein vierter Abschnitt angrenzen, der sich entlang einer Außenfläche des Fahrzeugs erstrecken kann. Die Aufnahmefläche des Fensterrahmens 120 kann aus einem Blechteil ausgeformt sein, das mit einem Grundkörper des Fensterrahmens 120 oder der Karosserie bzw. insbesondere dem Türflügel des Fahrzeugs verbunden ist. Alternativ kann die Aufnahmefläche eine Oberfläche einer Vollstruktur des Fensterrahmens 120 oder der Karosserie bzw. des Türflügels des Fahrzeugs sein.

Die Fensterscheibe 110 kann folglich in dem Fensterrahmen 120 so aufgenommen sein, dass die stufenförmigen Profile der abgestuften Randfläche und der abgestuften Aufnahmefläche ineinandergreifen. Hierbei liegen die ersten Abschnitte der Profile, die zweiten Abschnitte der Profile und die dritten Abschnitte der Profile, lediglich getrennt durch das Verklebungsmaterial 130, aneinander an.

Das stufenförmige Profil der Fensterscheibe 110 kann sich umlaufend um die Fensterscheibe 110 erstrecken. Alternativ kann das stufenförmige Profil nur in Teilbereichen ausgebildet sein, wobei die Schmalseiten der Scheiben 152, 154 in den übrigen Bereichen bündig miteinander abschließen können. Entsprechend dazu kann das stufenförmige Profil des Fensterrahmens 120 jeweils in denjenigen Bereichen ausgebildet sein, die mit dem stufenförmigen Profil versehenen Bereichen der Fensterscheibe 110 gegenüberliegen, wenn die Fensterscheibe 110 und der Fensterrahmen 120 zusammengefügt sind.

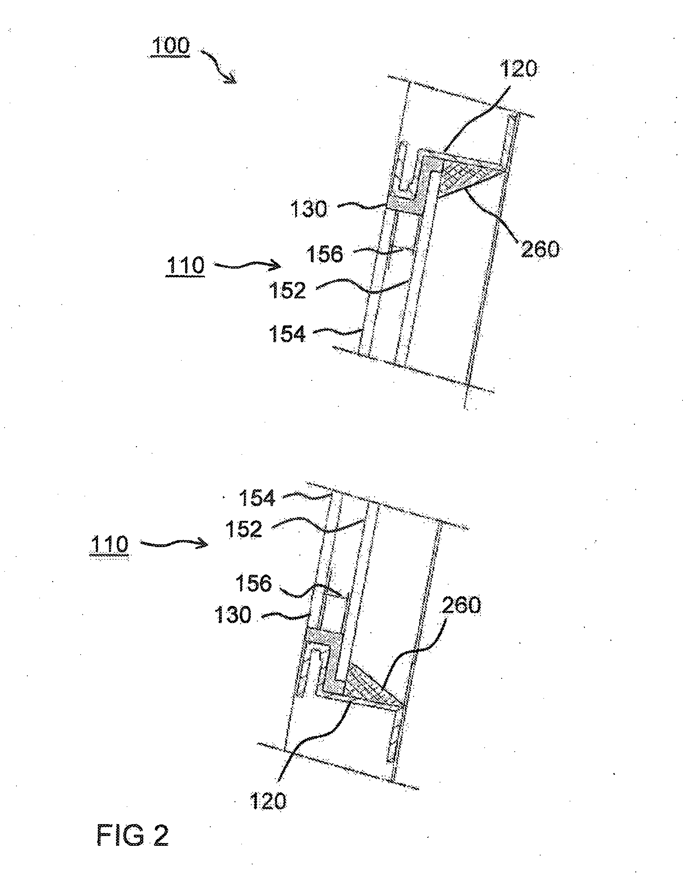

Fig. 2 zeigt eine Querschnittsdarstellung durch ein Fenster 100 für ein Fahrzeug, gemäß einem weiteren Ausführungsbeispiel der vorliegenden Erfindung. Der Aufbau des Fensters 100 gemäß Fig. 2 entspricht im Wesentlichen dem in Fig. 1 gezeigten Fenster 100, mit dem Unterschied, dass bei dem in Fig. 2 gezeigten Ausführungsbeispiel ein Verriegelungselement 260 vorgesehen ist.

Das Verriegelungselement 260 bildet eine Sicherung der Fensterscheibe 110 in dem Fensterrahmen 120 von innen. Daher ist das Verriegelungselement 260 auf der Seite des Fensters 100, die einer Innenseite des Fahrzeugs zugewandt ist, angeordnet. Bei dem Verriegelungselement 260 kann es sich um einen Kunststoff, Gummi, ein beschichtetes Metall, ein Haftmittel, eine Verkittung oder dergleichen handeln. Das Verriegelungselement 260 grenzt sowohl an einen Teil des ersten Abschnitts des stufenförmigen Profils des Fensterrahmens 120 als auch an einen Randbereich der in Richtung der Innenseite des Fahrzeugs weisenden Hauptfläche der ersten Scheibe 152 an und steht im direkten Kontakt mit diesen. Das Verriegelungselement 260 kann sich umfangsmäßig umlaufend an dem, der Innenseite des Fahrzeugs zugewandten Übergangsbereich zwischen Fensterrahmen 120 und Fensterscheibe 110 erstrecken. Alternativ kann das Verriegelungselement 260 lediglich an Abschnitten des Übergangsbereichs, beispielsweise nur in Eckbereichen, vorgesehen sein. Das Verriegelungselement 260 kann wie Kitt verspachtelt sein. Gemäß diesem Ausführungsbeispiel weist das Verriegelungselement 260 eine keilförmige beziehungsweise dreieckige Querschnittsfläche auf.

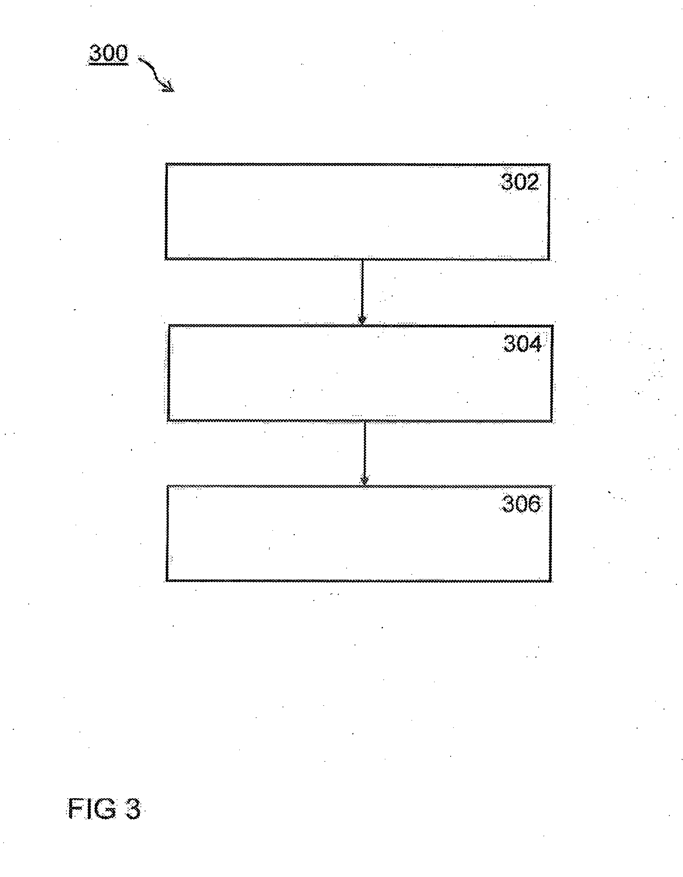

Fig. 3 zeigt ein Ablaufdiagramm eines erfindungsgemäßen Verfahrens 300. Bei dem Verfahren handelt es sich um ein Verfahren 300 zum Montieren einer Fensterscheibe an einer Struktur eines Fahrzeugs. Bei einem Schritt 302 wird ein erfindungsgemäßer Fensterrahmen an der Struktur des Fahrzeugs bereitgestellt. Der Fensterrahmen kann beispielsweise abnehmbar an der Struktur, beispielsweise einem Türflügel oder einer Karosserie, des Fahrzeugs angebracht werden oder kann durch einen Teil des Türflügels bzw. der Karosserie gebildet sein. Der Fensterrahmen kann den in den Figuren 1 und 2 gezeigten Aufbau aufweisen. Bei einem Schritt 304 wird eine Fensterscheibe auf einer einem Innenraum des Fahrzeugs zugewandten Seite der Struktur bereitgestellt. Die Fensterscheibe kann den in den Figuren 1 und 2 gezeigten Aufbau aufweisen. Bei einem Schritt 306 wird die Fensterscheibe in den Fensterrahmen in einer Richtung von der dem Innenraum des Fahrzeugs zugewandten Seite zu einer Außenseite des Fahrzeugs hin eingesetzt. Zwischen der Fensterscheibe und dem Fensterrahmen kann hierbei ein Verklebungsmaterial vorgesehen sein. Durch die Formgebung der erfindungsgemäßen Fensterscheibe und des erfindungsgemäßen Fensterrahmens ist hierbei sichergestellt, dass die Fensterscheibe nicht in Richtung einer Außenseite des Fahrzeugs aus dem Fensterrahmen herausfallen kann. Das Einsetzen der Fensterscheibe kann mittels eines speziellen Bewegungsablaufes auch von außen erfolgen. Dazu kann eine spezielle Manipulationsvorrichtung eingesetzt werden, die zuerst die Scheibe von außen nach innen einfädelt und anschließend z. B. mittels Saugnäpfen nach außen zieht**.** Dies kann im Fahrzeug, aber auch in einer Montagehalle an einer liegenden Tür erfolgen. In einem weiteren Schritt kann das in Fig. 2 beschriebene Verriegelungselement an der Innenseite der Fensterscheibe angebracht werden.

Die beschriebenen Ausführungsbeispiele sind nur beispielhaft gewählt und können miteinander kombiniert werden.

### Bezugszeichenliste

- 100: Fenster
- 110: Fensterscheibe
- 120: Fensterrahmen
- 130: Verklebungsmaterial
- 152: erste Scheibe
- 154: zweite Scheibe
- 156: Abstandhalter

- 260: Verriegelungselement

- 300: Verfahren zum Montieren einer Fensterscheibe an einer Struktur eines Fahrzeugs
- 302: erster Verfahrensschritt
- 304: zweiter Verfahrensschritt
- 306: dritter Verfahrensschritt

- 400: Fenster
- 410: Fensterscheibe
- 420: Fensterrahmen
- 430: Verklebungsmaterial
- 452: erste Scheibe
- 454: zweite Scheibe
- 456: Abstandhalter

## Patentansprüche

1. Fenster (100) für ein Fahrzeug, mit folgenden Merkmalen:
einer Fensterscheibe (110) mit einer abgestuften Randfläche, die sich über mindestens eine Schmalseite der Fensterscheibe (110) erstreckt, wobei die abgestufte Randfläche ein stufenförmiges Profil mit einer sich in Längsrichtung der Schmalseite erstreckenden Profilkante aufweist;
einem Fensterrahmen (120) mit einer abgestuften Aufnahmefläche zum Aufnehmen der abgestuften Randfläche der Fensterscheibe (110), wobei die abgestufte Aufnahmefläche in einem der abgestuften Randfläche der Fensterscheibe (110) gegenüberliegenden Bereich ein stufenförmiges Profil mit einer sich in Längsrichtung einer
Schmalseite des Fensterrahmens (120) erstreckenden Profilkante aufweist, wobei die Fensterscheibe (110) in dem Fensterrahmen (120) eingesetzt ist und der Fensterrahmen an einer Fahrzeugstruktur befestigt ist, wobei ein bündiger Abschluss von Fensterscheibe (110) und Fensterrahmen (120) an der Fahrzeugaußenseite erreicht wird;
**gekennzeichnet durch** ein Verriegelungselement (260), das auf einer einem Innenraum des Fahrzeugs zugewandten Seite der Fensterscheibe (110) angeordnet ist und mit dem Fensterrahmen (120) und der Fensterscheibe (110) verbunden ist, um eine Position der in dem Fensterrahmen (120) eingesetzten Fensterscheibe (110) zu sichern.

2. Fenster (100) gemäß Anspruch 1, wobei die Fensterscheibe mindestens zwei nebeneinander angeordnete Scheiben (152, 154) aufweist.

3. Fenster (100) gemäß Anspruch 2, bei der eine erste (152) der mindestens zwei Scheiben (152, 154) zumindest an der abgestuften Randfläche der Fensterscheibe (110) einen Überstand über eine zweite (154) der mindestens zwei Scheiben (152, 154) aufweist, um das stufenförmige Profil auszubilden.

4. Fenster (100) gemäß einem der vorangegangenen Ansprüche, bei dem die abgestufte Aufnahmefläche des Fensterrahmens (120) zum Ausbilden des stufenförmigen Profils eine Grundfläche und einen sich in Richtung der Fensterscheibe (110) erstreckenden Vorsprung aufweist, wobei eine Breite des Vorsprungs geringer als eine Breite der Schmalseite der Fensterscheibe (110) ist.

5. Fenster (100) gemäß einem der vorangegangenen Ansprüche, mit einem Verklebungsmaterial (130), das zumindest im Bereich des stufenförmigen Profils auf einer der Fensterscheibe (110) zugewandten Seite der abgestuften Aufnahmefläche angeordnet ist.

6. Fenster (100) gemäß einem der vorangegangenen Ansprüche, bei dem die abgestufte Aufnahmefläche des Fensterrahmens (120) aus einem Metall oder einem Kunststoff gebildet ist.

7. Verfahren (300) zum Montieren einer Fensterscheibe an einer Fahrzeugstruktur, mit folgenden Schritten:
Bereitstellen (302) eines Fensterrahmens an der Fahrzeugstruktur, wobei der Fensterrahmen eine abgestufte Aufnahmefläche zum Aufnehmen einer abgestuften Randfläche der Fensterscheibe aufweist, wobei die abgestufte Aufnahmefläche in einem der abgestuften Randfläche der Fensterscheibe gegenüberliegenden Bereich ein stufenförmiges Profil mit einer sich in Längsrichtung einer Schmalseite des Fensterrahmens erstreckenden Profilkante aufweist;
Bereitstellen (304) der Fensterscheibe auf einer einem Innenraum des Fahrzeugs zugewandten Seite der Fahrzeugstruktur, wobei die Fensterscheibe die abgestufte Randfläche aufweist, die sich über mindestens eine Schmalseite der Fensterscheibe erstreckt, wobei die abgestufte Randfläche ein stufenförmiges Profil mit einer sich in Längsrichtung der Schmalseite erstreckenden Profilkante aufweist;
Einsetzen (306) der Fensterscheibe in den Fensterrahmen, wobei das Einsetzen (306) in einer Richtung von der dem Innenraum des Fahrzeugs zugewandten Seite der Fahrzeugstruktur zu einer Außenseite des Fahrzeugs hin erfolgt, wobei ein bündiger Abschluss von Fensterscheibe (110) und Fensterrahmen (120) an der Fahrzeugaußenseite erreicht wird; und
Anordnen eines Verriegelungselements (260) auf einer einem Innenraum des Fahrzeugs zugewandten Seite der Fensterscheibe (110), sodass das Verriegelungselement (260) mit dem Fensterrahmen (120) und der Fensterscheibe (110) verbunden ist, um eine Position der in dem Fensterrahmen (120) eingesetzten Fensterscheibe (110) zu sichern.

## Claims

1. Window (100) for a vehicle, having the following features:
a window pane (110) with a stepped edge surface extending at least along a narrow side of the window pane (110), the stepped edge surface having a stepped profile with a profiled edge extending in the longitudinal direction of the narrow side;
a window frame (120) with a stepped reception surface for receiving the stepped edge surface of the window pane (110), wherein the stepped reception surface has a stepped profile with a profiled edge extending in the longitudinal direction of a narrow side of the window frame (120) in a region opposite the stepped edge surface of the window pane (110), wherein the window pane (110) is installed into the window frame (120) and the window frame is secured to a vehicle structure, wherein a flush fit of the window pane (110) and the window frame (120) on the outside of the vehicle is obtained;
**characterised by** a locking element (260), which is located on a side of the window pane (110) which faces an interior of the vehicle and which is joined to the window frame (120) and the window pane (110) for securing a position of the window pane (110) installed into the window frame (120).

2. Window (100) according to claim 1, wherein the window pane comprises at least two panes (152, 154) placed next to one another.

3. Window (100) according to claim 1, wherein a first pane (152) of the at least two panes (152, 154) has, at least at the stepped edge surface of the window pane (110), an overhang over a second pane (154) of the at least two panes (152, 154), in order to form the stepped profile.

4. Window (100) according to any of the preceding claims, wherein the stepped reception surface of the window frame (120) has a base surface and a projection extending towards the window pane (110) for forming the stepped profile, a width of the projection being less than a width of the narrow side of the window pane (110).

5. Window (100) according to any of the preceding claims, with a bonding material (130), which is placed on a side of the stepped reception surface facing the window pane (110) at least in the region of the stepped profile.

6. Window (100) according to any of the preceding claims, wherein the stepped reception surface of the window frame (120) is made of a metal or of a plastic material.

7. Method (300) for mounting a window pane on a vehicle structure, the method comprising the following steps:
the provision (302) of a window frame at the vehicle structure, wherein the window frame has a stepped reception surface for receiving a stepped edge surface of the window pane, wherein the stepped reception surface has a stepped profile with a profiled edge extending in the longitudinal direction of a narrow side of the window frame in a region opposite the stepped edge surface of the window pane;
the provision (304) of the window pane on a side of the vehicle structure which faces an interior of the vehicle, wherein the window pane comprises the stepped edge surface extending at least along a narrow side of the window pane, wherein the stepped edge surface has a stepped profile with a profiled edge extending in the longitudinal direction of the narrow side;
the installation (306) of the window pane into the window frame, wherein the installation (306) is carried out in a direction from the side of the vehicle structure which faces the interior of the vehicle towards an outside of the vehicle, wherein a flush fit of the window pane (110) and the window frame (120) on the outside of the vehicle is obtained; and
the arrangement of a locking element (260) on a side of the window pane (110) which faces an interior of the vehicle, so that the locking element (260) is joined to the window frame (120) and the window pane (110) in order to secure a position of the window pane (110) installed into the window frame (120).

## Revendications

1. Fenêtre (100) pour un véhicule, ayant les caractéristiques suivantes :
une vitre (110) de fenêtre ayant une surface de bord étagée, qui s'étend sur au moins une tranche de la vitre (110) de fenêtre, la surface de bord étagée ayant un profil en forme d'échelon ayant un bord de profil s'étendant dans la direction longitudinale de la tranche ;
un cadre (120) de fenêtre ayant une surface de réception étagée, pour la réception de la surface de bord étagée de la vitre (110) de fenêtre, la surface de réception étagée ayant, dans une partie opposée à la surface de bord étagée de la vitre (110) de fenêtre, un profil en forme d'échelon ayant un bord de profil s'étendant dans la direction longitudinale d'une tranche du cadre (120) de la fenêtre, la vitre (110) de la fenêtre étant insérée dans le cadre (120) de la fenêtre et le cadre de la fenêtre est fixé à une structure du véhicule, une fermeture au ras de la vitre (110) de la fenêtre et du cadre (120) de la fenêtre étant obtenue du côté extérieur du véhicule ;
**caractérisé par** un élément (260) de verrouillage, qui est monté sur une face de la vitre (110) de la fenêtre, tournée vers l'intérieur du véhicule, et qui est relié au cadre (120) de la fenêtre et à la vitre (110) de la fenêtre, pour fixer une position de la vitre (110) de la fenêtre insérée dans le cadre (120) de la fenêtre.

2. Fenêtre (100) suivant la revendication 1, dans laquelle la vitre de la fenêtre a au moins deux vitres (152, 154) disposées l'une à côté de l'autre.

3. Fenêtre (100) suivant la revendication 2, dans laquelle une première (152) des au moins deux vitres (152, 154) a, au moins sur la surface de bord étagée de la vitre (110) de la fenêtre, un dépassement par rapport à une deuxième (154) des au moins deux vitres (152, 154), pour former le profilé en forme d'échelon.

4. Fenêtre (100) suivant l'une des revendications précédentes, dans laquelle la surface de réception étagée du cadre (120) de la fenêtre a, pour former le profil échelonné, une surface de base et une saillie s'étendant en direction de la vitre (110) de la fenêtre, une largeur de la saillie étant plus petite qu'une largeur de la tranche de la vitre (110) de la fenêtre.

5. Fenêtre (100) suivant l'une des revendications précédentes, comprenant un matériau (130) de collage, qui est mis, au moins dans la partie du profil en forme d'échelon, d'un côté, tourné vers la vitre (110) de la fenêtre, de la surface de réception étagée.

6. Fenêtre (100) suivant l'une des revendications précédentes, dans laquelle la surface de réception étagée du cadre (120) de la fenêtre est en un métal ou en une matière plastique.

7. Procédé (300) de montage d'une vitre de fenêtre sur une structure de véhicule, comprenant les stades suivants :
on met (302) un cadre de fenêtre sur la structure du véhicule, le cadre de la fenêtre ayant une surface de réception étagée, pour la réception d'une surface de bord étagée de la vitre de la fenêtre, la surface de réception étagée ayant, dans une partie opposée à la surface de bord étagée de la vitre de la fenêtre, un profil en forme d'échelon, ayant un bord de profil s'étendant dans la direction longitudinale d'une tranche du cadre de la fenêtre ;
on met (304) la vitre de la fenêtre sur un côté, tourné vers l'intérieur du véhicule, de la structure du véhicule, la vitre de la fenêtre ayant la surface de bord étagée, qui s'étend sur au moins une tranche de la vitre de la fenêtre, la surface de bord étagée ayant un profil en forme d'échelon, ayant un bord de profil s'étendant dans la direction longitudinale de la tranche ;
on insère (306) la vitre de la fenêtre dans le cadre de la fenêtre, l'insertion (306) s'effectuant dans une direction allant du côté, tourné vers l'intérieur du véhicule, de la structure du véhicule, à un côté extérieur du véhicule, en obtenant une fermeture au ras de la vitre (110) de la fenêtre et du cadre (120) de la fenêtre du côté extérieur du véhicule et
on met un élément (260) de verrouillage sur un côté, tourné vers l'intérieur du véhicule, de la vitre (110) de la fenêtre, de manière à ce que l'élément (260) de verrouillage soit relié au cadre (120) de la fenêtre et à la vitre (110) de la fenêtre, pour fixer une position de la vitre (110) de la fenêtre insérée dans le cadre (120) de la fenêtre.
